# EUROPEAN PATENT APPLICATION

(11) **EP 2 262 252 A1**
(43) Date of publication of application: **15.12.2010**
(21) Application number: 09162346.2
(22) Date of filing: 10.06.2009
(51) Int. Cl.: H04N 5/765, H04L 12/28, H04N 5/44

(54) **HDMI switch with analogue inputs**

(71) Applicant: Koninklijke Philips Electronics N.V., 5621 BA Eindhoven (NL)
(72) Inventor: The designation of the inventor has not yet been filed
(74) Representative: Steenbeek, Leonardus Johannes

(57) **Abstract**

A system for processing video data has digital inputs (11,12) and a digital output (16) for outputting digital video data and control messages according to the predetermined digital video transfer format, like HDMI. A processor (18) couples a selected input to the digital output and assigns a hierarchical address code (19) and provides the control messages including the hierarchical address code. The device further has analog inputs (13,14), and converts the analog video or audio data into digital input data. The processor may couple a selected analog input to the digital output and provide the control messages for identifying the selected analog input by assigning a further hierarchical address code which comprises a further predetermined hierarchical code (20) for a digital input for identifying the selected analog input to other devices in the system mimicking a device on a digital input according to the predetermined digital video transfer format.

## Description

### FIELD OF THE INVENTION

The invention relates to processing video data, comprising outputting digital video data and control messages according to a predetermined digital video transfer format on at least one digital output, coupling a selected input to the digital output for transferring video data from the selected input to the digital output, and assigning, according to the predetermined digital video transfer format, a hierarchical address code which comprises a predetermined hierarchical code for identifying a digital input at a hierarchical level of the device with respect to a next hierarchical level of devices coupled to the digital output, and providing the control messages including the hierarchical address code for identifying the selected digital input to the next hierarchical level.

### BACKGROUND OF THE INVENTION

Devices for sourcing digital video data are known, for example video players like DVD players or set top boxes. In this document video includes any type of audiovisual data. The source device is to be coupled to a display device like a TV set or monitor. Video data is transferred between the devices via a suitable interface system, preferably a highspeed digital interface like High Definition Multimedia Interface (HDMI, see Reference [1]). For transferring the video signals from various source devices to the display device a device for processing video data as defined above may be used. Such a processing device, for example a HDMI switchbox or an audio/video receiver, has multiple digital video inputs and is arranged to select one of the available digital video signals and transfer the selected video data from the selected input to the output, which is coupled to the display device.

The processing device has a number of digital inputs for receiving digital video data, and one or more digital outputs for outputting digital video data and control messages according to a predetermined digital video transfer format, e.g. HDMI. It is noted that the HDMI standard (Reference [1]) includes a standard interface format for such control messages called the Consumer Electronic Control (CEC) protocol. The processing device has switching circuitry for coupling a selected digital input to the digital output for transferring the digital video data from the selected digital input to the digital output. According to HDMI-CEC (see 8.7 in Reference [1]) a unique hierarchical address code (called a Physical Address) is assigned to each input which comprises a predetermined hierarchical code for identifying a digital input at a hierarchical level of the device itself with respect to a next hierarchical level. In this document the highest hierarchical level is considered to be the final destination of the video signal, e.g. the TV set or display. A lower or preceding hierarchical level includes all devices coupled to the digital inputs of the higher level. For example, a TV set is considered to be at the first, highest level (i.e. the destination), a switchbox or audio/video receiver connected to the input of the TV is at the second level, a DVD player connected to the receiver is on the third level, etc. The HDMI Physical Address has 4 digits, where the first digit corresponds to the predetermined hierarchical code for the highest level. The device at the highest level (TV) assigns the codes to its inputs. The value of the first digit identifies the respective input of the device at the highest level, while a value of zero identifies the TV itself (0.0.0.0). The control messages include messages having the hierarchical address code for identifying the selected digital input and the device coupled thereto to the next hierarchical level.

### SUMMARY OF THE INVENTION

CEC provides an example of a processing device (called CEC switch, see section 11.1 in [1]) that selects between multiple HDMI inputs and assigns physical addresses to each digital input. The switch may also have other, non-HDMI, sources, such as a tuner or further inputs. In CEC, see section 13.2.2 in Reference [1], it is described how such a switch should act when switching to and from non-HDMI inputs. When a selected input is a non-HDMI input the switch should not send the protocol messages used when associated with switching to/between HDMI inputs, such as <Routing Information> or <Routing Change>. When switching to the internal source (tuner) the device indicates to be a source device itself instead of indicating a lower hierarchical address having a source connected. It is a problem of the prior art device that switching to or between non-HDMI inputs cannot be controlled by other devices in the system via CEC commands.

It is an object of the invention to provide a processing device of the above type that accommodates convenient control of analog inputs. The invention is defined by the independent claims. Advantageous embodiments are defined in the dependent claims.

For this purpose, according to a first aspect of the invention, the invention as described in the opening paragraph further comprises receiving analog video or audio data on at least one analog input, and converting the analog video or audio data into converted digital input data, coupling a selected analog input to the digital output for transferring the converted digital input data to the digital output, and providing the control messages for identifying the selected analog input by assigning a further hierarchical address code which comprises a further predetermined hierarchical code for a digital input for identifying the selected analog input to the next hierarchical level mimicking a device on a digital input according to the predetermined digital video transfer format.

The measures have the effect that the analog input and the analog source connected to that input are presented to the other devices in the system as if it were a digital input and source device according to the predetermined digital video transfer format, e.g. HDMI. The analog input may be for receiving audio, or video, or audio and video via respective analog signals, for example via a SCART connector. Advantageously other devices in the system, e.g. at the next higher hierarchical level and beyond, are now aware of the availability of any analog input device connected to the current device. When messages are sent from the other devices towards the respective hierarchical address code assigned to the analog input, the current system will receive the message and respond in an appropriate way that reflects the properties and controllable elements of the analog device.

The invention is also based on the following recognition. Traditionally analog inputs are not accessible from standardized digital video transfer formats. Such formats require devices to behave according to the specification of the format, which inherently is not possible with legacy devices having analog output signals coupled to the analog inputs. Hence such devices are not considered to be presentable in the hierarchical addressing structure. The inventors have seen that, by including the converter and providing the respective control messages, the switch device can take over the role of presenting the analog device at a lower hierarchical level, i.e. the level connected to its inputs. Hence the switch device is now able to mimic a digital device at the hierarchical level of its inputs, while actually an analog source is connected.

In an embodiment of the system, the processor is further arranged for augmenting the control messages by including a name associated with the analog input or an analog device coupled to the analog input. The effect is that the current device determines the name of the respective analog input. For example the name labels of the respective analog inputs, or a user defined name, may be inserted in the control messages. Advantageously the system now enables displaying valid names, e.g. with the respective signal path, in the graphical user interface in other devices in the system such as the TV.

In an embodiment of the system, the analog input is arranged for detecting status information of the analog input, and the processor is arranged for converting the status information to corresponding control data included in the control messages, and detecting the status information including at least one of:
- detecting a predetermined signal on the analog input indicating control information;
- detecting a predetermined signal property of an analog video input signal;
- detecting messages included in the analog input signal according to a predetermined analog video transfer format. The effect is that the status information and other valid data, like messages defined for the respective analog input format, available at the analog input are now converted into corresponding control messages on the digital output. Advantageously the system will correctly respond to the status and messages of the analog device.

In an embodiment of the system the processor is further arranged for assigning, as the further predetermined hierarchical code, a number that identifies the analog input. The effect is that users can easily identify the respective analog input, while other devices in the system present the respective input by said number.

Further preferred embodiments of the device according to the invention are given in the appended claims, disclosure of which is incorporated herein by reference.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows an embodiment of a device for processing video data,
Fig. 2 shows an embodiment of a video system, and
Fig. 3 shows an embodiment of a switch device and hierarchical addressing.
   In the figures, elements which correspond to elements already described have the same reference numerals.

### DETAILED DESCRIPTION OF EMBODIMENTS

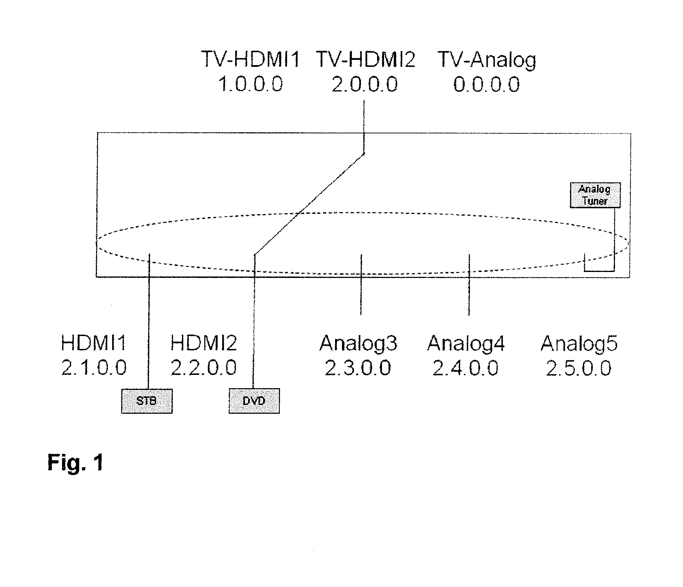

Fig. 1 shows a device for processing video data. The device has digital inputs 11,12 for receiving digital video data, and at least one digital output 16 for outputting digital video data and control messages according to the predetermined digital video transfer format, e.g. HDMI (see Reference [1]). Devices are connected to the inputs of the switch, like a set top box (STB connected to HDMI1) and a DVD player (DVD connected to HDMI2). The digital inputs may fully comply with the predetermined digital video transfer format. For the further description HDMI is used as an example of the predetermined digital video transfer format. It is to be noted that other audio/video interface formats which have similar requirements and addressing schemes can be used also.

The device has a processor 18 for coupling a selected digital input to the digital output for transferring the digital video data from the selected digital input to the digital output. The processor assigns a hierarchical address code 19 to each input, in the example a Physical Address according to HDMI. In Fig. 1 the output of the device 10 is assumed to be connected to a TV set at the second input thereof; hence the first digit in the hierarchical address code is 2. The hierarchical address code 19 has a predetermined hierarchical code 20 for identifying a digital input at the hierarchical level of the device with respect to the next hierarchical level (i.e. the TV set) coupled to the digital output 16. In Fig. 1 the device is at the second level and its output is connected to a TV, therefore the second digit in the example in Fig. 1 identifies the inputs of the device. The value of the second digit identifies the respective digital input and device connected thereto. For further description of the addressing in HDMI see Reference [1], in particular section 8.7. The physical address is required in order to obtain a logical address (see Reference [1], section CEC 10.2.1). CEC logical devices can supply an On Screen Display (OSD) name to the TV that can be used for user-friendly names during source selection purposes (see Reference [1], section CEC 13.11).

The processor 18 provides and processes control messages according to the predetermined digital video transfer format. It is to be noted that the control messages may be separate messages, such as CEC messages defined in HDMI, see Reference [1] section 8.6 and Supplement 1 on Consumer Electronics Control (CEC). The messages may also be included in the audio/video data stream, e.g. in a control field of a video frame. An example in HDMI is the Auxiliary Video Information (AVI) InfoFrame, see Reference [1] section 8.2 and further documents referenced in [1] section 1.2, such as CEA-861-D, "A DTV Profile For Uncompressed High Speed Digital Interfaces", which includes messages on frame signaling on color and chroma sampling, over- and underscan and aspect ratio, etc. The AVI InfoFrame is carried in the AV-stream from the source device to a digital television (DTV) Monitor as an Info Frame. By exchanging control data it may first be established if both devices support the transmission of said metadata. The AVI InfoFrame may be enhanced with metadata based on the analog input metadata as described below. It is to be noted that information may be also transferred from a destination device towards source devices, e.g. from TV to source transferred via E-EDID (see Reference [1], section 8.3) or any other suitable transfer protocol in a similar way. Such information may be converted by the processor and sent to the analog input device.

The control messages may include the hierarchical address code for identifying the selected digital input. It is noted that the control messages are transferred at least to the next hierarchical level, but may also be distributed to other devices in the system, e.g. via a communication bus. The TV can select one of the inputs by sending a SetStreamPath CEC message with the physical address that it wants to select. Other messages are available for devices to indicate that they have become active or not active and for manual changes of the switch position. Examples of the messages are the following CEC messages:
- <SetStreamPath> => select a particular device on an input via the hierarchical address;
- <Report Physical Address> => a device announces its physical and logical address (and device type);
- <Device Vendor ID> => a device announces a code identifying its manufacturer (see CEC 13.9);
- <Set OSD Name> => a device announces its name of device (for use in User Interface of TV) (see CEC 13.11).

Existing CEC devices, also called legacy devices in this document, use the <ActiveSource> message to declare itself as active (see Reference [1], section CEC 12.1). When a legacy switch makes transitions between non-HDMI inputs, then it shall not send <RoutingChange> messages (see Reference [1], section CEC 13.2.2). Hence the rest of the system cannot "see" the analog inputs. When a TV switches to an internal tuner or other non HDMI source then it shall broadcast <ActiveSource> [0.0.0.0] (see Reference [1], section CEC 13.2.2). No such statement is made about non HDMI sources on CEC switches, but in legacy switches the TV behavior may be copied. Non HDMI sources on the switchbox can be selected via the local controls of the switchbox. No information is available towards TV regarding which input is selected. In the legacy system TV is not aware of any available inputs or the associated names.

The device further has analog inputs 13,14 for receiving analog video or audio data, and a convertor 17 for converting the analog video or audio data into converted digital input data. One or more analog input devices are connected, like a recorder REC to input Analog3. It is noted that the number of analog and/or digital inputs can be any number.

The processor 18 is further arranged for coupling a selected analog input 13,14 to the digital output 16 for transferring the converted digital input data to the output. The control of the switching and internal data traffic by the processor is indicated schematically by dashed lines in Fig. 1. The analog input signal is first guided to the convertor 17, and subsequently, after conversion to a digital signal, coupled to the output. The convertor may include an analog to digital convertor and further video signal processing for converting an analog video signal into a digital video signal according to the HDMI format, and is known as such. The converter may further include an analog to digital convertor and further audio signal processing for converting an analog audio signal into a digital audio signal.

The processor 18 further provides control messages for identifying the selected analog input by assigning a further hierarchical address code, for example for the input labeled Analog3. The new address includes a further predetermined hierarchical code 20, which according to HDMI designates the device connected to a digital input. In the device as shown the value of the hierarchical code 20 identifies the selected analog input Analog3 to the next hierarchical level, i.e. the TV connected to the output, and/or other devices in the system. Furthermore, for use in the control messages, the processor may assign a logical address (LA) to the device connected to the analog input, e.g. the logical address as required by HDMI (see Reference [1], section CEC 10.2). It is noted that only a limited number of LA are available; preferably only devices that are actually connected and active will be assigned a LA by the processor. By assigning the further hierarchical address code of a digital input to the analog input, and providing the corresponding control messages as if a digital device were connected to a digital input identified by the further predetermined hierarchical code 20, the device mimics a device on a digital input according to the predetermined digital video transfer format HDMI.

In an embodiment the device has one or more digital inputs for connecting devices according to different digital input formats. For example, input 12 may be arranged for connecting a HDMI device of a preceding generation having a digital output that does not provide said CEC control messages. The processor 18 is arranged for providing the control messages for identifying the selected digital input. For non HDMI digital inputs also a further hierarchical address code for a digital input is assigned.

It is noted that standard CEC routing and addressing messages may now be used to select/deselect/switch between all inputs, including the analog inputs. The standardized HDMI-CEC messages can be used for the selection of the analog inputs, while, for example, break in of analog sources can be mapped to the <ActiveSource> message as explained below. Furthermore, information about these "extra" inputs can now be provided to other HDMI devices via standard or proprietary messages, e.g. vendor specific commands. The switchbox will provide configuration data to the TV. This data describes e.g. the available inputs, their nature/type (e.g. supported video signals) and the labels (strings) printed on the housing of the switchbox. In the examples below messages are given that have to be issued on the CEC control channel when selecting any of the inputs:
- Source selection by TV (select the STB device connected to input HDMI1 of device 10)
   1) TV selects desired source -> Broadcast <Set Stream Path> 2.1.0.0
   2) Active device responds -> Broadcast Active Source 2.1.0.0
- Source selection by TV (select the analog device connected to input Analog3 of device 10)
   1) TV selects desired source -> Broadcast <Set Stream Path> 2.3.0.0
   2) Device 10 responds (since it mimics on behalf of the connected analog device) -> Broadcast <Active Source> 2.3.0.0
- Source selection by switch (local control or SCART break-in)
   1) Switch changes position -> Broadcast <Routing Change> 2.z.0.0; 2.x.0.0
   (optional) 2) TV confirms selected source -> Broadcast <Set Stream Path> 2.x.0.0
   3a) Active device responds -> Broadcast <Active Source> 2.1.0.0 (only in case of HDMI inputs)
   3b) Device 10 responds (on behalf of connected analog device) -> Broadcast Active Source 2.3.0.0 (only in case of non-HDMI inputs).

In an embodiment the device includes an internal content source 15, for example an analog tuner or a hard-disk unit. The internal content source is arranged for receiving further input data including at least one of audio data or video data from a broadcast, a network or a storage medium. A further hierarchical address code (e.g. [2.5.0.0]) is assigned to the internal content source which now can be directly addressed by other devices in the system. For example a tuner is arranged for receiving analog broadcast information as the video or audio data. The analog data is further converted to digital data as described before. Alternatively, the tuner may be arranged to receive digital video signals, which then are decoded and formatted to the video format as defined by HDMI. The internal content source may also be an interface including dedicated hardware and/or software for controlling an external unit. The internal content source is arranged for retrieving the audio/video data from the respective source, e.g. by providing a user interface for selection, etc. Hence any source of analog or digital audio or video data that does not comply with HDMI may be integrated in the apparatus, such as an optical disc reader like Blu-ray Disc, a docking unit for a portable player like iPod, a memory interface like USB or SD, an internet interface, a mobile network like UMTS, etc. The convertor 17 converts the retrieved audio/video data into converted digital input data according to HDMI. The processor 18 is further arranged for coupling the internal content source to the digital output unit, and for providing the control messages, corresponding to the analog input described above. Hence the internal content source is identified by assigning a further hierarchical address code which comprises a further predetermined hierarchical code for a digital input for identifying the internal content source mimicking a device on a digital input according to the predetermined digital video transfer format.

In an embodiment, the processor 18 is arranged for assigning, as the further predetermined hierarchical code, a number that identifies the analog input. In the example the analog input is identified by the label Analog3, and is assigned the address code 3 by the processor. Hence a new CEC message is used that enables the TV to query for the analog inputs and/or internal sources present at a processing device (e.g. switch box) and the associated names. Numbers to identify analog sources preferably should match the numbering applied in the physical address, e.g. AV source at address 2.3.0.0 should have identifier 3.

In an embodiment, the analog input 11,12 is arranged for detecting status information of the analog input. The processor 18 then converts the status information to corresponding control data and includes said converted data in the control messages. The status information may be detected in any suitable way from the respective analog input signal, or from control signals as defined for the respective analog input. The switch device informs the TV about type of signal. The type of signal is sent via an AVI InfoFrame and/or a CEC message (e.g. vendor specific command, or a standardized command). Also the switch device informs the TV about its configuration and status. This can done whenever the switch device detects a hot plug signal appearing at its sink connector, analog input becomes active/inactive etc. A few examples of detecting a basic status (such as the connected device being active) are as follows.

Generally, a control signal that defines the status information of the analog input is translated into corresponding protocol messages, for example a signal indicating that an analog signal for validly rendering video or audio data is present.

A common analog interface standard for video signals is called SCART (see Reference [2], and further extensions). A specific voltage level on a control pin (pin 8 of the SCART connector) indicates that the connected device is active, and further indicates the aspect ratio (see Reference [2]; Table 1 on page 7, FUNCTION SWITCHING on contact number 8). SCART allows a connected device to indicate the need to switch it to (or away) the AV connector. A VCR or other playback device will optimally power on when a cassette is inserted, may power on the television set (or switch it to video mode) and then start playing immediately if the cassette's write protection tab is absent. SCART also supports automatic widescreen switching. This is an extension of the functionality of a pin which previously only indicated to the TV set that an external signal should be displayed. In the SCART example a predetermined signal on the analog input is a signal level or signal level change on a control pin of the connector.

The analog input of the current device detects the predetermined signal levels on the analog input indicating said control information. The level indicates that the analog device is de-activated or activated to render video or audio data. A change of the signal level indicates that the connected device becomes active, or that the activity is terminated. For example, the analog status (break in/out and/or (user) selection of analog inputs and/or internal sources) is mapped to <ActiveSource> and <InactiveSource> messages of CEC.

In an embodiment the video signal itself analyzed and a selected property is detected, for example the presence of sync pulses in the analog video signal. Based on the presence of the sync, the presence of a valid input signal is detected. Hence the active signal is detected based on a predetermined signal property of an analog video input signal.

In a further embodiment messages included in the analog input signal according to a predetermined analog video transfer format are detected. For example, the presence of messages on an interface bus defined on the analog input, such as messages on pin 10 of SCART (see Reference [2]; Table I on page 9, Control Signal Line on contact number 10). The use of the data pins was not standardized in the original SCART specification, resulting in the use of several different protocols, both proprietary protocols and semi-proprietary protocols based on standards such as D²B. CENELEC EN 50157-1 (Reference [4]) introduced AV.link as a standardized protocol to carry advanced control information between devices. It is a single-wire serial data bus and allows carrying remote control information and to negotiate analog signal types (e.g. RGB). AV.link is also known as nexTViewLink or under different trade names such as SmartLink, Q-Link, EasyLink, etc.

A further example are messages included in the input video signal itself, e.g. in the blanking period of the sync signals. An example is described in Reference [3], which defines Wide Screen Signalling (WSS) for 625-line television. The WSS messages indicate, inter alia, the aspect ratio of the video signal. Hence the analog input and the processor are arranged for receiving and analyzing the analog video signal according to a predetermined analog video transfer format, which for example corresponds to the Wide Screen Signalling [WSS] video transfer format. See Reference [3], page 9: group1 = indicates the aspect ratio : 4:3 , 14:9 , 16:9, >16:9. The message information from analog sources, like said WSS/SCART aspect ratio indication, is mapped in the control messages such as said AVI Infoframes or CEC messages.

In an embodiment detecting the status information of the analog input is further augmented by detecting one or more of the characteristic properties, either from the video signal or from respective control signals or messages transferred with the signal. For example, frame frequency, line frequency (i.e. number of video lines in a frame), or interlace type of the analog video input signal may be detected. A specific signal type or signal format of the analog input signal, such as a PAL, SECAM or NTSC format signal may be detected and the respective properties, such as the number of video lines, may be retrieved from a memory in the detector. Also, the presence, language or content of additional data transferred with the analog audio or video data can be detected, such as teletext, subtitles or data streams transferred in between video data or on a separate data bus. Corresponding control information can be mapped onto the AVI InfoFrame and/or CEC messages.

In an embodiment the analog control information is transferred as a packet in the digital data stream while identifying the respective input to which it relates. The packet may include further metadata or control data for adjusting the video processing. In a practical embodiment the metadata is inserted in packets within the HDMI Data Islands.

In an embodiment the processor 18 is arranged for augmenting the control messages by including a name associated with the analog input or an analog device coupled to the analog input. The device might include the name of the address label (for example Analog3 in Fig. 1). Alternatively the device might have a user interface (UI) that allows the user to manually enter a preferred name for the respective input, for example Tape, as described now. Transferring the names enables matching the capabilities (i.e. available inputs) of a remote switchbox in a TV GUI and presenting the information clearly to the customer. The GUI of the TV will show an overview (e.g. a list or a logical topology) of the inputs of the switchbox and the connected devices. The customer then can base his source selection on available devices rather than bluntly zapping through all possible sources.

The switch device operates as follows. When the switchbox is connected to the TV, it will send configuration data to the TV. This data describes the available inputs, their nature/type (e.g. supported video signals) and the labels (strings) printed on the housing of the switchbox (or changed by the user in the GUI of the switch, if such feature is implemented in the switch). The TV uses this data to extend the source selection menu. On the digital inputs of the switch the TV is able to discover the connected devices by means of the existing HDMI-CEC messages (if these connected are CEC capable; otherwise they are handled in a similar manner as described for analog inputs). For the analog inputs of the switch the switchbox provides the information by providing and using the corresponding CEC messages as if HDMI inputs were present and HDMI devices were connected. For the inputs the physical plug name will be replaced by the connected device(s) names (as provided via said messages) in the TV GUI menu. Whenever the user selects an input/device via the GUI of the TV, the TV will check whether it requires a signal path involving the switchbox. If so, it will select the switchbox connection as input and instruct the switchbox to go to the selected input. The latter is done via a control channel, e.g. CEC when using HDMI.

It is noted that, according to the existing HDMI-CEC standard, a stand-alone switch has a logical address of 15. This is a predetermined address and shared with other such devices. Also, in CEC, there is no way to send messages to such a switch directly, since the logical address value of 15 as Destination address is used as a broadcast address indication (see section CEC 6.1.3 and 10.2 in [1]). This means that TV cannot directly address a switchbox. The above embodiments allow that the switchbox communicates with other devices. Alternatively an information push model may be used, as follows. The switchbox informs the TV about type of signal when <Set Stream Path> is received or at a <Routing Change> command. The type of signal is sent via a directed vendor specific message. The switchbox informs TV about its configuration. The configuration info is sent to TV via CEC messages. The messages contain data about the number of inputs that can be selected and their logical names (strings of text characters).

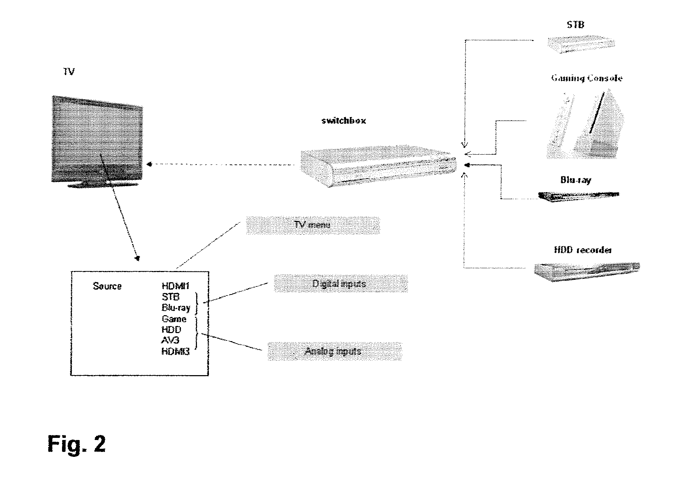

Fig. 2 shows a video system. The system is connected according to HDMI for the digital video signal, and also has analog inputs as described above. An HDMI input (HDMI2) of a TV set 22 is connected to the digital output of a video processing switch device 23, such as a switchbox. The switch device 23 may also be an audio-video amplifier or receiver, which further generates audio signals to accommodate various loudspeakers. The switch device has various digital inputs and analog inputs as described above for the device shown in Fig. 1, to which source devices 24 are connected. In the example two digital sources (a set top box STB and an optical disc player Blu-ray) are connected to digital inputs via HDMI cables. Two analog sources (a Gaming Console and a HDD recorder) are connected to analog inputs. The switchbox has a third analog input AV3 30 which is not used in this example. The TV set has a Graphical User Interface (GUI); one display page 25 being schematically shown. The pages in the GUI are usually presented as a TV menu 27. In this Menu the sources and inputs are shown. In particular the inputs of the TV itself are directly shown (HDMI1 and HDMI3), while the input HDMI2 is expanded into the devices connected via the switch device 23 based on the messages received by the TV set. Alternatively the menu may show the labels of inputs on the switchbox like AV1, AV2 and AV3. In particular the GUI shows the digital inputs 28 in the same list as the analog inputs 29. It is noted that the name labels used in the GUI menu correspond to the names of the actual devices 24. In particular the switch device 23 has provided the name labels for the inputs (e.g. entered by the user via a set up menu of the switch device; and in absence of such user action typically the names printed on the switchbox enclosure for these inputs).

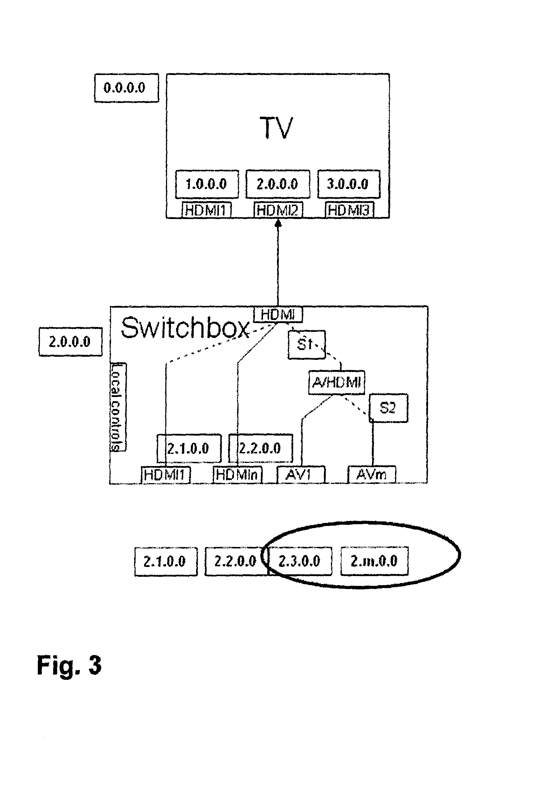

Fig. 3 shows a switch device and hierarchical addressing. The example is based on HDMI. A TV set 32 is connected to a switch device 33. The TV has the device hierarchical address 34 [0.0.0.0]; the first digit being zero to indicate the TV itself. The address 34 is the device's own physical address. The HDMI inputs of the TV are at the next lower level and have assigned addresses [1.0.0.0; 2.0.0.0; 3.0.0.0]. These addresses are the physical addresses given to the connected device. The devices connected to the TV inputs are at the next lower hierarchical level. The switch device, e.g. a switchbox, is connected to HDMI2 of the TV set and therefore is assigned a source address 35 [2.0.0.0]. Subsequently, the address assigned to any input of the switchbox has "2" as its first digit. The hierarchical addresses of the digital inputs of the switch device (HDMI1, HDMIn) are [2.1.0.0; 2.2.0.0]. The switch device has also analog inputs, marked AV1 to AVm. The analog input signal is coupled to an analog/digital converter 17 marked A/HDMI to indicate that analog video and audio signals are converted to digital HDMI signals. Such convertors are known as such. The analog inputs of the switch device 33 have been assigned a hierarchical address 38 that is in the same range as the digital HDMI inputs, in the example [2.3.0.0] up to [2.x.0.0] where x = m+2. Hence the set of devices connected to the various inputs of the switch device therefore each have a respective hierarchical address 36 [2.1.0.0] to [2.x.0.0]. The switch device further has local controls 37, for example button to select a particular input device or a Graphical User Interface to be displayed on the TV set or a local display and operated via a remote control unit. The local controls 37 may enable setting a particular hierarchical address, or a device type for assigning a predefined logical address according to CEC (see [1] section 10.2, table 5) for a particular input of the switch device. The device types may be provided as default selectable types (e.g. tuner, playback or recorder), and corresponding default device names may be provided (e.g. a device type tuner, named SAT). External and/or internal sources on the switchbox can be selected via the local control of the switchbox. Information on the selected source will be distributed on the CEC control channel and other devices can act upon the messages.

In an embodiment the device has signaling elements for transferring analog control information towards an analog device coupled to the analog input, for example a dedicated signal pin, a bidirectional data bus or an infrared source 39 (e.g. a LED, also called an IR blaster) to transfer control signals to a device connected to the analog input. The digital output is arranged for receiving incoming messages according to the predetermined digital video transfer format, such as CEC messages. The processor converts control data received on the output (i.e. travelling in the opposite direction with respect to the video signal). The received control data is intended for the selected analog input mimicking a digital input. Hence the processor converts data from the incoming messages into the analog control information. In particular analog sources can be controlled via Remote Control Pass Through messages defined in CEC, which are then translated to the infrared codes (as defined in the so-called IR codespace) and further transferred via the IR blaster to the analog source device. The switchbox mimics one or more appropriate type of logical device(s) and proxies the control of the device(s) connected to the analog input(s) and/or internal sources. In this way CEC devices in the system can control the analog device in the same way as they can control a digital HDMI-CEC device. For example, the switch/amplifier selects a device input and sends <ActiveSource> 2.x.0.0. (from Logical Address = y). The TV starts RC passthrough (to LA=y). The switch/amplifier sends any commands received via RC passthrough to device via the IR blaster.

A preferred embodiment can be summarized as follows. A system for processing video data has digital inputs 11,12 and a digital output 16 for outputting digital video data and control messages according to the predetermined digital video transfer format, like HDMI. A processor 18 couples a selected input to the digital output and assigns a hierarchical address code 19 and provides the control messages including the hierarchical address code. The device further has analog inputs 13,14, and converts the analog video or audio data into digital input data. The processor may couple a selected analog input to the digital output and provide the control messages for identifying the selected analog input by assigning a further hierarchical address code which comprises a further predetermined hierarchical code 20 for a digital input for identifying the selected analog input to other devices in the system mimicking a device on a digital input according to the predetermined digital video transfer format.

It is to be noted that the invention may be implemented in hardware and/or software, using programmable components. Methods for implementing the invention have the processing steps corresponding to the processing of video data in the device as shown and elucidated with reference to Fig. 1. Although the invention has been mainly explained by embodiments using HDMI digital interfaces, the invention is also suitable for any video processing environment that is compliant with an interface standard having only digital inputs defined. The invention may be applied in every video processing device, like a switchbox, a multimedia server, an audio video receiver or amplifier, a personal computer having an audio/video interface, etc. Furthermore, the invention may be applied in any device having any combination of non-HDMI inputs and/or internal sources which are exposed as individual HDMI source devices on different physical addresses, e.g. an apparatus only having a number of internal content sources, and no further digital or analog inputs.

It should be noted that the above-mentioned embodiments illustrate rather than limit the invention, and that those skilled in the art will be able to design many alternative embodiments without departing from the scope of the appended claims. The mere fact that certain measures are recited in mutually different dependent claims does not indicate that a combination of these measures cannot be used to advantage. The word 'comprising' does not exclude the presence of other elements or steps than those listed, and the word 'a' or 'an' preceding an element does not exclude the presence of a plurality of such elements. Any reference signs do not limit the scope of the claims. The invention may be implemented by means of both hardware and software, and several elements may be represented by the same item of hardware or software, and a processor may fulfill the function of one or more elements, possibly in cooperation with hardware elements.

### LIST OF REFERENCES:

Reference [1]: "High Definition Multimedia Interface; Specification Version 1.3a of Nov 10 2006" available at http://hdmi.org/manufacturer/specification.aspx
Reference [2]: "EN 50049-1:1997 Peritelevision connector" (also called SCART); European Standard from CENELEC.
Reference [3]: "EN 300 294 V1.3.2 (1998-04) Television systems; 625 television Wide Screen Signalling (WSS)"; European Standard from ETSI.
Reference [4]: "EN 50157-1 Domestic and similar electronic equipment interconnection requirements: AV. link. General"; European Standard from CENELEC.

## Claims

1. Device for processing video data, the device comprising:
a digital output (16) for outputting digital video data and control messages according to a predetermined digital video transfer format,
a processor (18) for coupling a selected input to the digital output for transferring video data from the selected input to the digital output, and for assigning, according to the predetermined digital video transfer format, a hierarchical address code (19) which comprises a predetermined hierarchical code for identifying a digital input at a hierarchical level of the device with respect to a next hierarchical level of devices coupled to the digital output, and for providing the control messages including the hierarchical address code for identifying the selected digital input to the next hierarchical level,
an analog input (13,14) for receiving analog video or audio data, and
a converter (17) for converting the analog video or audio data into converted digital input data,
the processor (18) being further arranged for coupling a selected analog input to the digital output for transferring the converted digital input data to the digital output, and for providing the control messages for identifying the selected analog input by assigning a further hierarchical address code which comprises a further predetermined hierarchical code (20) for a digital input for identifying the selected analog input to the next hierarchical level mimicking a device on a digital input according to the predetermined digital video transfer format.

2. Device as claimed in claim 1, wherein the processor (18) is further arranged for assigning a logical address according to the predetermined digital video transfer format to a device actually connected to the analog input.

3. Device as claimed in claim 1, wherein the processor (18) is further arranged for augmenting the control messages by including a name associated with the analog input or an analog device coupled to the analog input.

4. Device as claimed in claim 1, wherein the analog input (13,14) is arranged for detecting status information of the analog input, and the processor (18) is arranged for converting the status information to corresponding control data included in the control messages, and detecting the status information including at least one of:
- detecting a predetermined signal on the analog input indicating control information;
- detecting a predetermined signal property of an analog video input signal;
- detecting messages included in the analog input signal according to a predetermined analog video transfer format.

5. Device as claimed in claim 4, wherein the status information of the analog input (13,14) comprises at least one of
- an analog signal for validly rendering video or audio data being present, becoming available or being terminated;
- the analog device being de-activated or activated to render video or audio data;
- a signal type or signal format of the analog input signal;
- an aspect ratio of the analog video data,
- a frame frequency, number of video lines, or interlace type of the analog video input signal;
- the presence, language or content of additional data transferred with the analog audio or video data.

6. Device as claimed in claim 4, wherein the predetermined signal on the analog input comprises a signal level or signal level change on a control pin of a connector according to a predetermined connector interface standard.

7. Device as claimed in claim 4, wherein the predetermined analog video transfer format corresponds to the Wide Screen Signalling [WSS] video transfer format.

8. Device as claimed in claim 1, wherein the processor (18) is further arranged for assigning, as the further predetermined hierarchical code, a number that identifies the analog input.

9. Device as claimed in claim 1, wherein the predetermined digital video transfer format corresponds to the High Definition Multimedia Interface [HDMI] format.

10. Device as claimed in claim 1, wherein
the device comprises a digital input (12) for connecting a device having a digital output that does not provide control messages according to the predetermined digital video transfer format, and
the processor (18) is arranged for providing the control messages according to the predetermined digital video transfer format for mimicking a device on a digital input according to the predetermined digital video transfer format.

11. Device as claimed in claim 1, wherein
the device comprises an internal content source (15) arranged for receiving further input data including at least one of audio data or video data from a broadcast, a network or a storage medium, and the converter (17) is arranged for converting the further input data into converted digital input data,
the processor (18) is further arranged for coupling the internal content source to the digital output for transferring the converted digital input data to the digital output, and for providing the control messages for identifying the internal content source by assigning a further hierarchical address code which comprises a further predetermined hierarchical code (20) for a digital input for identifying the internal content source to the next hierarchical level mimicking a device on a digital input according to the predetermined digital video transfer format.

12. Device as claimed in claim 1 or 10, wherein the device is provided with a signaling unit (39) for transferring control information towards a device coupled to the analog input or the digital input, and the digital output is arranged for receiving incoming messages according to the predetermined digital video transfer format, and the processor is arranged for converting control data intended for the selected input mimicking a device on a digital input from the incoming messages into the control information.

13. Method of processing video data, the method comprising:
outputting digital video data and control messages according to a predetermined digital video transfer format on at least one digital output,
coupling a selected input to the digital output for transferring video data from the selected input to the digital output,
assigning, according to the predetermined digital video transfer format, a hierarchical address code which comprises a predetermined hierarchical code for identifying a digital input at a hierarchical level of the device with respect to a next hierarchical level of devices coupled to the digital output,
providing the control messages including the hierarchical address code for identifying the selected digital input to the next hierarchical level,
receiving analog video or audio data on at least one analog input,
converting the analog video or audio data into converted digital input data,
coupling a selected analog input to the digital output for transferring the converted digital input data to the digital output, and
providing the control messages for identifying the selected analog input by assigning a further hierarchical address code which comprises a further predetermined hierarchical code for a digital input for identifying the selected analog input to the next hierarchical level mimicking a device on a digital input according to the predetermined digital video transfer format.
